# EUROPEAN PATENT SPECIFICATION

(11) **EP 4 127 512 B1**
(45) Date of publication and mention of the grant of the patent: **05.11.2025**
(21) Application number: 21714432.8
(22) Date of filing: 26.03.2021
(51) Int. Cl.: F16H 7/08, F16H 7/12

(54) **TENSIONER FOR AN ACCESSORY DRIVE OF A MOTOR VEHICLE AND ACCESSORY DRIVE INCLUDING SUCH A TENSIONER**
SPANNVORRICHTUNG FÜR EINEN HILFSANTRIEB EINES KRAFTFAHRZEUGS UND HILFSANTRIEB MIT SOLCH EINER SPANNVORRICHTUNG
TENSIONNEUR POUR TRANSMISSION AUXILIAIRE DE VÉHICULE À MOTEUR ET TRANSMISSION AUXILIAIRE COMPRENANT UN TEL TENSIONNEUR

(30) Priority: 26.03.2020 IT 202000006433
(43) Date of publication of application: 08.02.2023
(73) Proprietor: Muviq S.r.l., 10015 Ivrea (TO) (IT)
(72) Inventor: PENNAZZA, Mario, 65123 Pescara (IT); D'ANNA, Sebastien, 66100 Chieti (IT)
(74) Representative: Studio Torta S.p.A.
(86) International application number: PCT/IB2021/052524
(87) International publication number: WO 2021/191856

(56) References cited:
- EP-A1- 1 464 871
- WO-A1-2014/100894
- WO-A1-2019/161361
- US-A1- 2019 301 572
- US-B2- 8 439 780

## Description

### TECHNICAL FIELD

The present invention relates to a tensioner for an accessory drive of a motor vehicle and an accessory drive including such a tensioner.

### BACKGROUND ART

The accessory drive of an internal combustion engine generally comprises a pulley connected to the crankshaft, a pulley connected to the shaft of the electric machine and may include one or more pulleys for driving other accessories, such as the compressor of the air-conditioning system. The accessory drive also includes a belt for transmitting motion between these pulleys and a tensioner configured to ensure a correct minimum level of tension of the belt and to avoid slippage between the belt and the pulleys.

In conventional accessory drives, where the electrical machine is an alternator driven by the engine, the tensioner acts on the slack span of the belt, i.e. the span located downstream of the engine and upstream of the alternator with reference to the direction of motion of the belt.

In motor vehicles, a reversible electric machine is increasingly being used instead of the conventional alternator, which can operate - in addition to the conventional generator mode - in other modes, e.g. as a regenerative brake, or as an additional motor acting in combination with the internal combustion engine.

The use of a reversible electric machine implies that the belt span that is taut under the operating conditions in which the electric machine is driven by the engine becomes the slack span when the drive torque is delivered by the electric machine.

Various solutions have therefore been developed to ensure the correct tensioning of the belt spans.

One solution consists, for example, in using a tensioner with two arms hinged at a common pivot and bearing respective pulleys. The arms are subject to the elastic force of a spring which tends to bring them closer together in order to keep the pulleys in contact with the respective belt spans. An example of this solution is described in EP 1581753-A. The common axis of the two arms is arranged within the belt path.

The dimensions of the base on which the arms are articulated and of the spring arranged around the common axis of articulation of the arms are such that this solution is unsuitable for applications where there are packaging constraints within the belt path, such as for example where the drive has only two pulleys. Furthermore, the arrangement of the arms in relation to the resulting forces acting on the pulleys is not optimal.

Another solution is to mount the tensioner on the electric machine.

According to a first solution, the tensioner comprises a first annular element rotatable about the axis of the electric machine and bearing a first pulley, and a second annular element rotatable about the axis of the electric machine and bearing a second first pulley. A spring acts between the two annular elements to exert an elastic force between the two annular elements to keep the first and second pulley in contact with the respective spans of the belt.

In another known solution, instead of the second annular element, a circumferentially sliding arm is used with respect to the annular element and bearing the second pulley; a spring is interposed between the annular element and the arm in order to push the pulleys in contact with the belt.

US2019/0301572 discloses a tensioner comprising a base, a first tensioner subassembly pivotally mounted to the base, a second tensioner subassembly pivotally mounted to the base, and a tensile member joining the first tensioner subassembly and the second tensioner subassembly. The first tensioner 4 subassembly is urged in a direction opposite the second tensioner subassembly, and a one-way clutch is frictionally engaged with the first tensioner subassembly whereby a relative movement of the first tensioner subassembly away from the second tensioner subassembly is restricted for a first predetermined operating condition and a relative movement of the first tensioner subassembly toward the second tensioner subassembly is not restricted for a second predetermined operating condition.

These solutions are relatively heavy and expensive. US8439780B2 discloses a tensioner including a first arm and a second arm rigidly connected to each other and rotatable about a common rotation axis, a first pulley linked to the first arm and rotatable about a first axis, a second pulley linked to the second arm and rotatable about a second axis; the first and second arms are carried by and hinged to a first end of mobile element about the common rotation axis, the mobile element having a second end hinged to a fixed axis.

### DISCLOSURE OF INVENTION

The aim of the present invention is to provide a tensioner for an accessory drive having a reduced weight and cost compared to the known solutions.

This aim is achieved by a tensioner for an accessory drive according to claim 1.

Thanks to the use of two arms joined together, the load ("hubload") on the pulley acting on the taut span of the belt is transmitted to the slack span, thus favouring its tensioning; however, the presence of a working arm and an elastic element in one of the pulleys enables to filter out tension peaks under certain operating conditions. The belt therefore operates at a lower average tension, and the tensioner can be conveniently sized for lower average loads, making it lighter and less expensive.

This functional advantage is obtained without additional encumbrance, as the working arm is inside one of the two pulleys.

The use of two arms rigidly connected to each other also enables to reduce the overall dimensions around the arm rotation axis, where no springs are provided.

The present invention also relates to an accessory drive according to claim 10.

### BRIEF DESCRIPTION OF THE DRAWINGS

For a better understanding of the present invention a preferred embodiment is described, by way of non-limiting example and with reference to the attached drawings, in which:
Figure 1 is a schematic plan view of a drive train of a motor vehicle fitted with an accessory drive according to the present invention
Figure 2 is a schematic view of the accessory drive of Figure 1, fitted with a tensioner according to the present invention;
Figure 3 is a schematic view of an accessory drive according to a variant of the present invention;
Figure 4 is a frontal schematic view of a tensioner according to a further variant of the present invention;
Figure 5 is a partial median cross-section of a tensioner according to another embodiment of the present invention; and
Figure 6 is a cross-section according to line VI-VI of Figure 5.

### BEST MODE FOR CARRYING OUT THE INVENTION

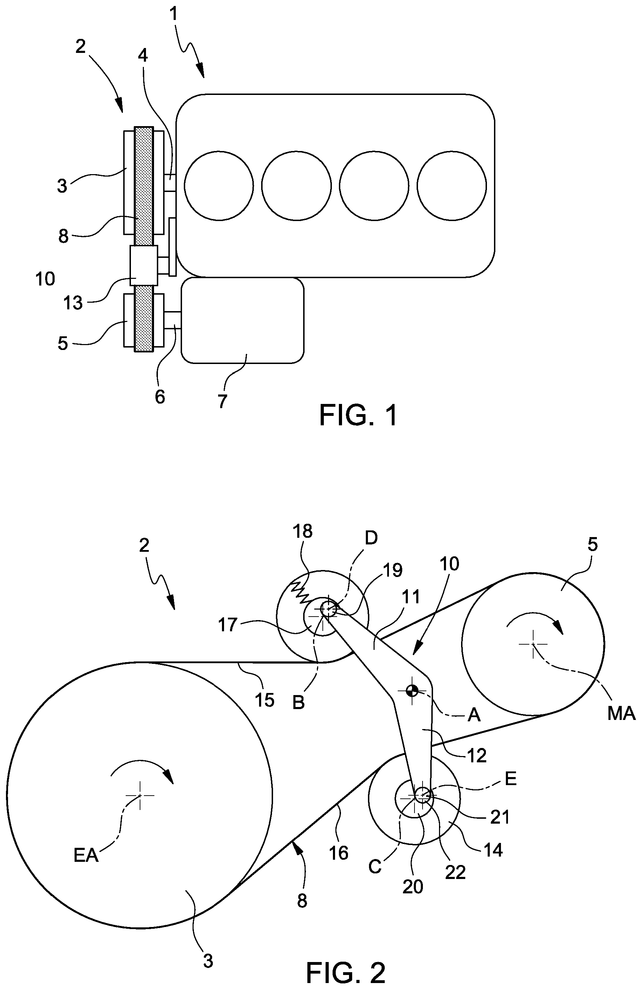

With reference to Figure 1, an internal combustion engine of a motor vehicle equipped with an accessory drive according to the present invention is indicated with 1.

The accessory drive 2 comprises a first pulley 3 connected to a crankshaft 4 of engine 1, of axis EA, a second pulley 5 connected to a shaft 6 of an electric machine 7, of axis MA, and a belt 8 connecting the first pulley 3 and the second pulley 5. The accessory drive may include other pulleys, not shown, for driving other accessories of engine 1, such as an air conditioning system compressor.

Accessory drive 2 also includes a two-arm tensioner 10 including a first arm 11 and a second arm 12 rigidly connected together and rotatable about a common A rotation axis, a first pulley 13 bound to the first arm 11 and a second pulley 14 bound to the second arm as better described below. Axis A is conveniently defined by a pin configured to be secured to the crankcase of engine 1 by means of a screw.

First and second pulley 13, 14 cooperate with the respective spans 15, 16 of belt 8, and are rotatable about a first axis B and a second axis C respectively. Specifically, first pulley 13 acts on span 15 extending between first pulley 3 and second pulley 5 in the direction of rotation of the pulleys (clockwise with reference to the view of figure 2), while second pulley 14 acts on span 16 extending between second pulley 5 and first pulley 3, again with reference to the direction of rotation of the pulleys. When the internal combustion engine 1 drives electric machine 7, span 16 is the taut span of belt 8 and span 15 is the slack span; when instead electric machine 7 drives internal combustion engine 1 (boost) span 15 is the taut span and span 16 is the slack span.

First pulley 13 is connected to first arm 11 by means of a working arm 17 rotatable with respect to arm 11 about a third axis D distinct from axis B; first pulley 13 is rotatable with respect to working arm 17 about axis B. Axes B and D are parallel to each other and to axis A, and their distance is such that axis D is contained within the overall dimensions of pulley 13, i.e. the cylinder defined by the external surface of pulley 13.

Working arm 17 is loaded by a spring 18 so as to push first pulley 13 towards second pulley 14 and, in use, against section 15 of belt 8.

Working arm 17, kinematically defined by the distance between axes B and D, is conveniently made by an eccentric defined by a cylindrical pin of axis B, about which first pulley 13 rotates with the interposition of a bearing (not shown). The eccentric is provided with an axial eccentric hole of axis D in which a pin 19 is housed, which is rigidly fixed or integral to first arm 11. Spring 18, shown only schematically in figure 2, is preferably constituted by a helical or spiral torsion spring with one end connected to first arm 11 and one end connected to working arm 17. In use, working arm 17 is conveniently oriented so that the plane passing through axes B and D is substantially orthogonal to the load acting on first pulley 13, in order to maximize the effectiveness of spring 18 and therefore reduce its sizing.

Second pulley 14 is connected to second arm 12 by means of a loading arm 20 rotatable with respect to arm 12 about a fourth axis E distinct from axis C; second pulley 14 is rotatable with respect to loading arm 20 about axis C. Axes C and E are parallel to each other and to axis A.

Loading arm 20, kinematically defined by the distance d1 between axes C and E, is conveniently made by an eccentric defined by a cylindrical pin of axis C, about which the second pulley 14 rotates with the interposition of a bearing (not illustrated). The eccentric is provided with an eccentric axial hole 21 of axis E in which is housed a locking screw 22 screwed into second arm 12. Loading arm 20 is only used to bring belt 8 to a nominal tension during installation, as will be better described below, and is then locked with respect to second arm 12 by means of screw 22. In use, therefore, loading arm 20 is rigidly fixed to second arm 12 and second pulley 14 rotates about axis C which is fixed with respect to second arm 12.

Conveniently, axis A is inside the belt path 8 in order to minimize the length of arms 11, 12 and therefore their weight. In the embodiment of figure 2, arms 11, 12 define as a whole a V-structure open towards the first pulley 3.

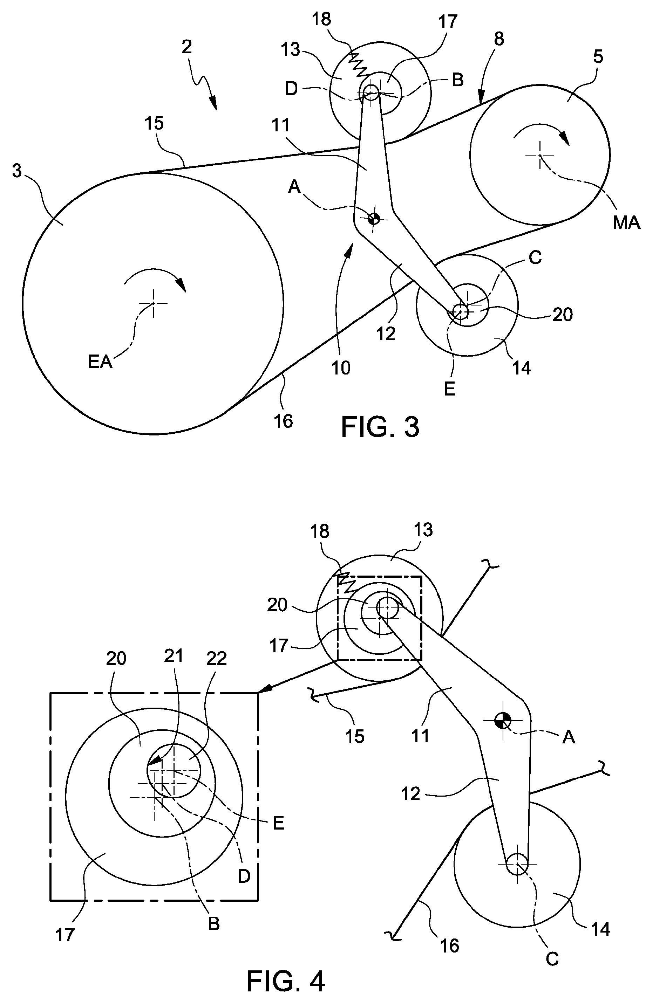

Figure 3 shows a variant in which arms 11, 12 of tensioner 10 together define a V-structure open towards the second pulley 5.

The operation of tensioner 10 is as follows.

When installed on engine 1, tensioner 10 is mounted with the first pulley 13 locked on the first arm 11 in a nominal position, e.g. by means of a conventional lock-up pin (not shown). Conveniently, the nominal position is such that the first pulley 13 is kept behind the belt 8, i.e. moved out of the belt path 8, so that the belt can be mounted.

Screw 22 is loosened at this stage.

Once the belt has been fitted, the loading arm 20 is rotated about the axis E, conveniently by means of a special cooperating spanner with a seat on the arm itself (not shown), so as to bring the belt 8 to a prefixed nominal tension. At this point, screw 22 is tightened, thus securing loading arm 20 to the second arm 12. working arm 17 is finally unlocked by extracting the locking pin; the action of the spring 18 makes the working arm 17 rotate about axis D, bringing the first pulley 13 into the installation position.

In use, tensioner 10 is free to rotate about axis A under the action of the resulting forces exchanged between pulleys 13, 14 and the respective spans 15, 16 of the belt. In particular, in transients where span 16 gets slack from taut (and therefore span 15 gets taut from slack), tensioner 10 rotates about axis A in a clockwise direction, with reference to the diagram in figure 2; vice versa, in transients where span 15 gets taut from slack (and therefore span 16 slack from taut), tensioner 10 rotates counterclockwise.

The load on the pulley 13 or 14 cooperating with the taut span is transferred through the two arms 11, 12 to the pulley acting on the slack span, determining its tensioning.

The spring 18, acting on the working arm 17, gives the tensioner 10 a second degree of freedom (in addition to the rotation about axis A); the elasticity of the spring 18 allows to filter the tension peaks during the transients, and therefore to reduce the average loads acting on the tensioner itself. In this way, the tensioner can be lightened, saving material and cost. As the B-axis is contained within the sheave size 13, the work arm 17 can also be constructed with minimal material expenditure and without introducing any additional space requirements.

In the examples shown in Figures 2 and 3 the two arms are elongated elements forming a V-shaped structure; this conformation is not necessary and can be replaced, for example, by a triangular or curved structure, it being understood that this structure must define two arms from a kinematic point of view.

Figure 4 shows a different embodiment of tensioner 10, described below in so far as it differs from the forms of implementation in Figures 2 and 3 and using the same reference numerals to indicate parts equal or corresponding to parts already described.

In the tensioner 10 of figure 4 (see enlarged detail), the working arm 17 and the loading arm 20 are associated to the same pulley 13, pulley 14 being simply rotatable on arm 12 about an axis C fixed with respect to the arm.

In the schematic example shown in figure 4, the two arms 17, 20 are defined by eccentrics housed in one other. In particular, the loading arm 20 consists of a cylindrical pin with an external cylindrical surface of axis D, having an eccentric hole 21, through which a locking screw 22 of axis E is mounted. loading arm 20 is therefore rotatable about the axis E to vary the position of axis D during installation, and is then locked in a position corresponding to a nominal belt tension 8.

Working arm 17 is conveniently made as a second eccentric defined by a pin having an external cylindrical surface of axis B, about which the first pulley 13 rotates, provided with an eccentric axial hole of axis D in which the loading pin 20 is housed. spring 18, shown only schematically in figure 4, is preferably constituted by a helical or spiral torsion spring with one end connected to the loading pin 20 and one end connected to the working arm 17.

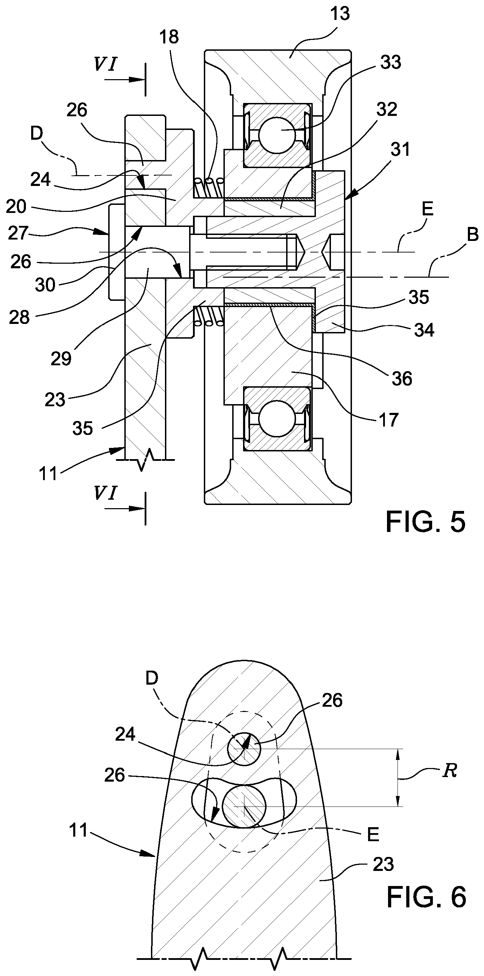

Figures 5 and 6 show an example of a working arm 17 and a loading arm 20 combined together.

Loading arm 20, in the form of an elongated plate contacting the end portion 23 of arm 11 on the side of the pulley 13, is provided with a pin 27 of axis D housed in the hole 24 of arm 11 and a hole 28 of axis E. The distance between axis D and the axis E is equal to R, so that the hole 28 faces the slot 26.

A screw 27 is mounted through the slot 26 of arm 11 and the hole 28, which engages with a centering portion 29. Screw 27 is fitted with a head 30 abutting axially against arm 11 on the opposite side of pulley 13.

Screw 27 engages a nut 31, on which a spacer 32 is fitted as a pivot for the working arm 17. The latter consists of an eccentric having an external cylindrical surface of axis B on which pulley 13 is mounted by means of a bearing 33. Nut 31 has an end flange 34 which allows spacer 32 to be blocked axially against an annular projection 35 of the loading arm 20.

A helical torsion spring 18, coaxial to the annular prominence 35, is disposed between the loading arm 20 and the working arm 17 with one end linked to the loading arm 20 and one end linked to the working arm 17 (not shown). Spring 18 has the dual purpose of exerting a torque on the working arm 17 to keep the pulley 13 in contact with the belt 8, and of exerting an axial force on the working arm 17 to bias it axially against the end flange 34 of nut screw 31, with a ring 35 of polymer material therebetween. Working arm 17 is supported radially on spacer 32 by a polymer bushing 36. The material of ring 35 and bushing 36 is selected in such a way as to achieve the desired damping of the oscillations of working arm 17.

The operation of the tensioner of Figures 5 and 6 is similar to Figure 4. During installation, the nut 31 is loosened to allow the loading arm 20 to rotate about axis D and the work arm 17 is conveniently locked by a locking pin (not shown) in relation to the loading arm 20.

Once the nominal belt tension is reached, the nut 31 is tightened on screw 27, thus locking the loading arm 20 against the first arm 11 by friction. working arm 17, once unlocked, is loaded by the spring 18 so as to keep the pulley 13 against the belt 8.

From an analysis of the tensioners according to the invention, the advantages provided by the invention are evident.

In particular, thanks to the use of arms rigidly connected to one another and a loading arm contained in the overall dimensions of one of the pulleys, structural design of the tensioner can be optimized to reduce its weight and cost.

Finally, it is clear that modifications and variations can be made to the tensioners described which do not fall outside the scope of protection of the present invention.

In particular, the technical solutions for the construction of the working arm and the loading arm may differ from the embodiment described.

Moreover, with reference to the solutions in figures 4 to 6, the working arm 17 and the loading arm 20 can be placed between the second arm 12 and the second pulley 14, rather than between the first arm 11 and the first pulley 13.

The solution of figures 2 and 3 can also be reversed, by linking working arm 17 to the second arm 12 and loading arm 20 to the first arm 11.

The expressions "first arm", "second arm", "first pulley" and "second pulley" in the claims are therefore used for the mere purpose of distinguishing one arm from the other and one pulley from the other, and are not limited to the specific configurations described; such terms are interchangeable and can refer to each of the arms and pulleys.

Finally, the common rotation axis of the arms can be external, rather than internal, to the belt path.

## Claims

1. A two-arm tensioner for an accessory drive (2) of an internal combustion engine (1), comprising:
- a first arm (11) and a second arm (12) rigidly connected to each other and rotatable about a common rotation axis (A),
- a first pulley (13) linked to the first arm (11) and rotatable about a first axis (B),
- a second pulley (14) linked to the second arm (12) and rotatable about a second axis (C),
- a working arm (17) rotatable with respect to the first arm (11) about a third axis (D) distinct from the first axis (B), the first pulley (13) being carried by the working arm (17); and
the third axis (D) being located within an outline of the first pulley (13),
**characterized by** including an elastic element (18) configured to exert on the working arm (17) an elastic force tending to bring the first pulley (13) closer to the second pulley (14) ,and a loading arm (20) linked to one of the first and second arms (11, 12), said loading arm (20) being rotatable with respect to said one of said first and second arms (11, 12) about a fourth axis (E) distinct from the first axis (B) or, respectively, second axis (C) during installation to adjust the belt tension, the fourth axis (E) being inside the outline of the first pulley (13) or, respectively, second pulley (14), said loading arm (20) being rigidly fixed, in use, to said one of said first and second arms (11, 12).

2. A tensioner as claimed in claim 1, wherein the working arm (17) includes an eccentric.

3. A tensioner as claimed in claim 2, wherein the eccentric includes a pin with an external cylindrical surface having an axis coincident with said first axis (B) and provided with an eccentric axial hole having an axis coincident with said third axis (D), said axial hole being engaged by a pin (19) carried by the first arm (11).

4. A tensioner as claimed in any of the previous claims, wherein the loading arm (20) includes an eccentric.

5. A tensioner as claimed in any of the previous claims, wherein the loading arm (20) is carried by the second arm (12).

6. A tensioner as claimed in any of claims 1 to 4, wherein the loading arm (20) is carried by the first arm (12).

7. A tensioner as claimed in claim 6, wherein the working arm (7) is carried by the loading arm (20).

8. A tensioner as claimed in claim 6 or 7, wherein the loading arm (20) and the working arm (17) consist of two eccentrics housed in each other.

9. A tensioner as claimed in any of the preceding claims, wherein the first and second arm (11, 12) form a V-shaped structure.

10. Accessory drive for an internal combustion engine comprising at least a first pulley (3) connected to a drive shaft of an internal combustion engine and a second pulley (5) connected to a shaft (6) of an electric machine and a belt (8) cooperating with the first and second pulley (3, 5), **characterized by** including a tensioner (10) as claimed in any of the above claims.

11. Accessory drive as claimed in claim 10, wherein said common rotation axis (A) of the arms (11, 12) is internal to the path of the belt (8).

12. Accessory drive as claimed in claim 10, wherein said common rotation axis (A) of the arms (11, 12) is external to the path of the belt (8).

## Patentansprüche

1. -Zweiarmige Spannvorrichtung für einen Zusatzantrieb (2) eines Verbrennungsmotors (1), umfassend:
- einen ersten Arm (11) und einen zweiten Arm (12), die starr miteinander verbunden und um eine gemeinsame Drehachse (A) drehbar sind,
- eine erste Riemenscheibe (13), die mit dem ersten Arm (11) verbunden und um eine erste Achse (B) drehbar ist,
- eine zweite Riemenscheibe (14), die mit dem zweiten Arm (12) verbunden ist und um eine zweite Achse (C) drehbar ist,
- einen Arbeitsarm (17), der in Bezug auf den ersten Arm (11) um eine dritte, von der ersten Achse (B) verschiedene, Achse (D) drehbar ist, wobei die erste Riemenscheibe (13) von dem Arbeitsarm (17) getragen wird;
und
- wobei die dritte Achse (D) innerhalb eines Umrisses der ersten Riemenscheibe (13) angeordnet ist,
**dadurch gekennzeichnet, dass** die Spannvorrichtung ein elastisches Element (18) umfasst, das dazu konfiguriert ist, auf den Arbeitsarm (17) eine elastische Kraft auszuüben, die dazu neigt, die erste Riemenscheibe (13) näher an die zweite Riemenscheibe (14) zu bringen, und
einen Belastungsarm (20), verbunden mit einem der ersten und zweiten Arme (11, 12), wobei der Belastungsarm (20) in Bezug auf den einen der ersten und zweiten Arme (11, 12) um eine vierte Achse (E) drehbar ist, die sich von der ersten Achse (B) bzw. der zweiten Achse (C) während der Installation unterscheidet, um die Riemenspannung einzustellen, wobei die vierte Achse (E) innerhalb des Umrisses der ersten Riemenscheibe (13) oder,
bzw. der zweiten Riemenscheibe (14) liegt, wobei der Belastungsarm (20), in Gebrauch, starr an einem der ersten und zweiten Arme (11, 12) befestigt ist.

2. Spannvorrichtung nach Anspruch 1, wobei der Arbeitsarm (17) einen Exzenter aufweist.

3. Spannvorrichtung nach Anspruch 2, wobei der Exzenter einen Stift mit einer zylindrischen Oberfläche aufweist, dessen Achse mit der ersten Achse (B) zusammenfällt und der mit einer exzentrischen axialen Bohrung versehen ist, deren Achse mit der dritten Achse (D) zusammenfällt, wobei die axiale Bohrung mit einem Stift (19) in Eingriff steht, der von dem ersten Arm (11) getragen wird.

4. Spannvorrichtung nach einem der vorhergehenden Ansprüche, wobei der Belastungsarm (20) einen Exzenter aufweist.

5. Spannvorrichtung nach einem der vorhergehenden Ansprüche, wobei der Belastungsarm (20) von dem zweiten Arm (12) getragen wird.

6. Spannvorrichtung nach einem der Ansprüche 1 bis 4, wobei der Belastungsarm (20) von dem ersten Arm (12) getragen wird.

7. Spannvorrichtung nach Anspruch 6, wobei der Arbeitsarm (7) vom Belastungsarm (20) getragen wird.

8. Spannvorrichtung nach Anspruch 6 oder 7, wobei der Belastungsarm (20) und der Arbeitsarm (17) aus zwei ineinander gelagerten Exzentern bestehen.

9. Spannvorrichtung nach einem der vorhergehenden Ansprüche, wobei der erste und der zweite Arm (11, 12) eine V-förmige Struktur bilden.

10. Zusatzantrieb für einen Verbrennungsmotor umfassend wenigstens eine erste Riemenscheibe (3), die mit einer Antriebswelle eines Verbrennungsmotors und einer zweiten Riemenscheibe (5) verbunden ist, die wiederum mit einer Welle (6) einer elektrischen Maschine und einem Riemen (8), der mit der ersten und zweiten Riemenscheibe (3, 5) zusammenwirkt, verbunden ist, **dadurch gekennzeichnet, dass** der Zusatzantrieb eine Spannvorrichtung (10) nach einem der vorhergehenden Ansprüche umfasst.

11. Zusatzantrieb nach Anspruch 10, wobei die gemeinsame Drehachse (A) der Arme (11, 12) innerhalb der Bahn des Riemens (8) liegt.

12. Zusatzantrieb nach Anspruch 10, wobei die gemeinsame Drehachse (A) der Arme (11, 12) außerhalb der Bahn des Riemens (8) liegt.

## Revendications

1. Tendeur à deux bras pour un entraînement d'accessoire (2) d'un moteur à combustion interne (1), comprenant :
- un premier bras (11) et un deuxième bras (12) reliés rigidement l'un à l'autre et pouvant tourner autour d'un axe de rotation (A) commun,
- une première poulie (13) reliée au premier bras (11) et pouvant tourner autour d'un premier axe (B),
- une deuxième poulie (14) reliée au deuxième bras (12) et pouvant tourner autour d'un deuxième axe (C),
- un bras de travail (17) pouvant tourner par rapport au premier bras (11) autour d'un troisième axe (D) distinct du premier axe (B), la première poulie (13) étant portée par le bras de travail (17) ; et
- le troisième axe (D) étant situé à l'intérieur d'un contour de la première poulie (13),
**caractérisé par le fait qu'**il comporte un élément élastique (18) configuré pour exercer sur le bras de travail (17) une force élastique tendant à rapprocher la première poulie (13) de la deuxième poulie (14), et
un bras de chargement (20) relié à l'un des premier et deuxième bras (11, 12), ledit bras de chargement (20) pouvant tourner par rapport à l'un desdits premier et deuxième bras (11, 12) autour d'un quatrième axe (E) distinct du premier axe (B) ou, respectivement, deuxième axe (C) lors de l'installation pour régler la tension de la courroie, le quatrième axe (E) étant à l'intérieur du contour de la première poulie (13) ou, respectivement, deuxième poulie (14), ledit bras de chargement (20) étant rigidement fixé, en service, audit un desdits premier et deuxième bras (11, 12).

2. Tendeur selon la revendication 1, dans lequel le bras de travail (17) comporte un excentrique.

3. Tendeur selon la revendication 2, dans lequel l'excentrique comporte une goupille avec une surface cylindrique externe ayant un axe coïncidant avec ledit premier axe (B) et pourvue d'un trou axial excentrique ayant un axe coïncidant avec ledit troisième axe (D), ledit trou axial étant engagé par une goupille (19) portée par le premier bras (11).

4. Tendeur selon l'une quelconque des revendications précédentes, dans lequel le bras de chargement (20) comporte un excentrique.

5. Tendeur selon l'une quelconque des revendications précédentes, dans lequel le bras de chargement (20) est porté par le deuxième bras (12).

6. Tendeur selon l'une quelconque des revendications 1 à 4, dans lequel le bras de chargement (20) est porté par le premier bras (12).

7. Tendeur selon la revendication 6, dans lequel le bras de travail (7) est porté par le bras de chargement (20).

8. Tendeur selon la revendication 6 ou 7, dans lequel le bras de chargement (20) et le bras de travail (17) sont constitués de deux excentriques logés l'un dans l'autre.

9. Tendeur selon l'une quelconque des revendications précédentes, dans lequel les premier et deuxième bras (11, 12) forment une structure en forme de V.

10. Entraînement d'accessoire pour un moteur à combustion interne comprenant au moins une première poulie (3) reliée à un arbre d'entraînement d'un moteur à combustion interne et une deuxième poulie (5) reliée à un arbre (6) d'une machine électrique et une courroie (8) coopérant avec la première et deuxième poulie (3, 5), **caractérisé par le fait qu'**il comporte un tendeur (10) selon l'une quelconque des revendications ci-dessus.

11. Entraînement d'accessoire selon la revendication 10, dans lequel ledit axe de rotation (A) commun des bras (11, 12) est interne au chemin de la courroie (8).

12. Entraînement d'accessoire selon la revendication 10, dans lequel ledit axe de rotation (A) commun des bras (11, 12) est externe au chemin de la courroie (8).
